(19) Europäisches Patentamt / European Patent Office / Office européen des brevets

(11) **EP 4 703 448 A1**

(12) **EUROPEAN PATENT APPLICATION**
published in accordance with Art. 153(4) EPC

(43) Date of publication:
04.03.2026  Bulletin 2026/10

(21) Application number: 24796812.6

(22) Date of filing: 11.04.2024

(51) International Patent Classification (IPC):
*C09J 175/04* (2006.01)    *B32B 15/095* (2006.01)
*B32B 27/40* (2006.01)    *B65D 65/40* (2006.01)
*C08G 18/10* (2006.01)    *C08G 18/66* (2006.01)
*C09J 175/06* (2006.01)

(52) Cooperative Patent Classification (CPC):
B32B 15/095; B32B 27/40; B65D 65/40;
C08G 18/10; C08G 18/66; C09J 175/04;
C09J 175/06

(86) International application number:
PCT/JP2024/014631

(87) International publication number:
WO 2024/225056 (31.10.2024 Gazette 2024/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.04.2023  JP 2023073263

(71) Applicant: DIC Corporation
Tokyo 174-8520 (JP)

(72) Inventor: TOMITA, Daiki
Tokyo 174-8520 (JP)

(74) Representative: Kraus & Lederer PartGmbB
Thomas-Wimmer-Ring 15
80539 München (DE)

(54) **ADHESIVE, LAMINATE, AND PACKAGING MATERIAL**

(57)    Provided is a solventless two-part curable adhesive having excellent adhesive strength after retort treatment even when a metal foil such as an aluminum foil or a substrate having a vapor deposition layer of a metal such as aluminum and a plastic film are bonded to each other. A two-part curable solventless adhesive containing: a polyisocyanate composition (X) and a polyol composition (Y), in which the polyisocyanate composition (X) contains a polyurethane polyisocyanate (A1) which is a reaction product of a polyisocyanate (1) and a polyester polyol (m), and an acid anhydride (B), an acid value derived from the acid anhydride (B) in the polyisocyanate composition (X) is 1 mg KOH/g or more and 100 mg KOH/g or less, a content of a diisocyanate monomer in the polyisocyanate composition (X) is 0.1% by mass or less, and the polyol composition (Y) contains a polyester polyol (C1).

**Description**

TECHNICAL FIELD

The present invention relates to a two-part curable adhesive, a laminate, and a packaging material.

BACKGROUND ART

A laminate used for various packaging materials, labels, and the like is imparted with a design property, functionality, storability, convenience, transport resistance, and the like by laminating a substrate such as a wide variety of various plastic films, metal foils, and paper. A packaging material obtained by forming the laminate into a bag shape is used as a packaging material in various fields including food, pharmaceutical, and detergent.

Conventionally, a laminate film has been mainly obtained by a dry lamination method in which a film is coated with a two-part curable adhesive obtained by dissolving a polyisocyanate compound and a polyol compound in a volatile organic solvent, the organic solvent is volatilized in a process of passing through an oven, and another film is bonded thereto. However, in recent years, from the viewpoint of reducing the environmental load and improving the work environment, a two-part curable solventless adhesive in which a polyisocyanate compound and a polyol compound do not contain a volatile organic solvent has attracted attention (PTL 1 and PTL 2).

CITATION LIST

PATENT LITERATURE

PTL 1: JP2014-159548A
PTL 2: JP2001-172602A

SUMMARY OF INVENTION

TECHNICAL PROBLEM

When a metal foil such as an aluminum foil or a substrate having a vapor deposition layer of a metal such as aluminum is bonded to a plastic film using such a solventless two-part curable adhesive, there is a case where the adhesive strength after retort treatment is poor. Particularly, when the content contains an acidic component such as vinegar, the adhesive strength after retort treatment is significantly poor.

The invention has been made in view of such a circumstance, and an object thereof is to provide a solventless two-part curable adhesive having excellent adhesive strength after retort treatment even when a metal foil such as an aluminum foil or a substrate having a vapor deposition layer of a metal such as aluminum is bonded to a plastic film. Further, another object thereof is to provide a solventless two-part curable adhesive having excellent adhesive strength after retorting even when the content contains a large amount of an acidic component.

SOLUTION TO PROBLEM

That is, the invention relates to a two-part curable solventless adhesive including: a polyisocyanate composition (X) and a polyol composition (Y), in which the polyisocyanate composition (X) contains a polyurethane polyisocyanate (A1) which is a reaction product of a polyisocyanate (l) and a polyester polyol (m), and an acid anhydride (B), an acid value derived from the acid anhydride (B) in the polyisocyanate composition (X) is 1 mg KOH/g or more and 100 mg KOH/g or less, a content of a diisocyanate monomer in the polyisocyanate composition (X) is 0.1% by mass or less, and the polyol composition (Y) contains a polyester polyol (C1).

ADVANTAGEOUS EFFECTS OF INVENTION

According to the invention, it is possible to provide a solventless two-part curable adhesive having excellent adhesive strength after retort treatment even when a metal foil such as an aluminum foil or a substrate having a vapor deposition layer of a metal such as aluminum is bonded to a plastic film.

DESCRIPTION OF EMBODIMENTS

<Adhesive>

(Polyisocyanate Composition (X))

(Polyurethane Polyisocyanate (A1))

The polyisocyanate composition (X) used in the two-part curable adhesive of the invention contains a polyurethane polyisocyanate (A1) which is a reaction product of a polyisocyanate (I) and a polyol (m). The polyisocyanate (I) used in the synthesis of the polyurethane polyisocyanate (A1) is not particularly limited, and a conventionally known aromatic diisocyanate, aromatic aliphatic diisocyanate, aliphatic diisocyanate, alicyclic diisocyanate, and biuret body, nurate body, adduct body, allophanate body, carbodiimide-modified body, uretdione-modified body and the like of these diisocyanates can be used. The polyisocyanate can be used alone or in combination of two or more kinds thereof.

Examples of the aromatic diisocyanate can include 2,2'-diphenylmethane diisocyanate, 2,4'-diphenylmethane diisocyanate, 4,4'-diphenylmethane diisocyanate (another name: MDI), polymethylene polyphenyl polyisocyanate (also referred to as polymeric MDI or crude MDI), 1,3-phenylene diisocyanate, 4,4'-diphenyl diisocyanate, 1,4-phenylene diisocyanate (another name: PPDI), 2,4-tolylene diisocyanate, 2,6-tolylene diisocyanate (another name: TDI), 4,4'-toluidine diisocyanate, 2,4,6-triisocyanate toluene, 1,3,5-triisocyanate benzene, tolidine diisocyanate (another name: TODI), dianisidine diisocyanate, naphthalene diisocyanate (another name: NDI), 4,4'-diphenyl ether diisocyanate, and 4,4',4"-triphenylmethane triisocyanate, but are not limited thereto.

The aromatic aliphatic diisocyanate means an aliphatic isocyanate having one or more aromatic rings in the molecule, and examples thereof can include m- or p-xylylene diisocyanate (another name: XDI), and α,α,α',α'-tetramethylxylylene diisocyanate (another name: TMXDI), but are not limited thereto.

Examples of the aliphatic diisocyanate can include trimethylene diisocyanate, tetramethylene diisocyanate, hexamethylene diisocyanate (another name: HDI), pentamethylene diisocyanate (another name: PDI), 1,2-propylene diisocyanate, 2,3-butylene diisocyanate, 1,3-butylene diisocyanate, dodecamethylene diisocyanate, 2,4,4-trimethylhexamethylene diisocyanate, and lysine diisocyanate (another name: LDI), but are not limited thereto.

Examples of the alicyclic diisocyanate can include 3-isocyanatomethyl-3,5,5-trimethylcyclohexyl isocyanate, isophorone diisocyanate (another name: IPDI), 1,3-cyclopentane diisocyanate, 1,3-cyclohexane diisocyanate, 1,4-cyclohexane diisocyanate, methyl-2,4-cyclohexane diisocyanate, methyl-2,6-cyclohexane diisocyanate, 4,4'-methylene biscyclohexyl isocyanate (another name: hydrogenated MDI or HMDI), 1,3-bis (isocyanatomethyl) cyclohexane (another name: hydrogenated XDI or HXDI), hydrogenated TMXDI, and norbornane diisocyanate (another name: NBDI), but are not limited thereto.

The polyisocyanate (1) is preferably at least one selected from an aromatic diisocyanate, an aromatic aliphatic diisocyanate, and an alicyclic diisocyanate, and more preferably at least one selected from toluene diisocyanate, xylene diisocyanate, and isophorone diisocyanate. In the step of dissolving the acid anhydride at a high temperature, MDI has high reactivity and there is a possibility of causing a side reaction, and thus it is preferable that MDI is not contained.

The polyol (m) is not particularly limited, and examples thereof include a glycol such as ethylene glycol, 1,2-propanediol, 1,3-propanediol, 2-methyl-1,3-propanediol, 1,4-butanediol, 1,5-pentanediol, 3-methyl-1,5-pentanediol, 1,6-hexanediol, neopentyl glycol, dimethylbutanediol, butylethylpropanediol, diethylene glycol, triethylene glycol, tetraethylene glycol, dipropylene glycol, tripropylene glycol, bishydroxyethoxybenzene, 1,4-cyclohexanediol, and 1,4-cyclohexanedimethanol;

a trifunctional or tetrafunctional aliphatic alcohol such as glycerin, trimethylolpropane, and pentaerythritol;
a bisphenol such as bisphenol A, bisphenol F, hydrogenated bisphenol A, and hydrogenated bisphenol F;
dimer diol;
a polyether polyol obtained by addition polymerization of an alkylene oxide such as ethylene oxide, propylene oxide, butylene oxide, styrene oxide, epichlorohydrin, tetrahydrofuran, or cyclohexylene in the presence of a polymerization initiator such as glycol or a trifunctional or tetrafunctional aliphatic alcohol;
a polyester polyol which is a reaction product of a polyhydric alcohol such as a glycol and a trifunctional or tetrafunctional aliphatic alcohol with a polycarboxylic acid;
a polyether polyester polyol which is a reaction product of a polyether polyol and a polycarboxylic acid;
a polyurethane polyol which is a reaction product of a polyhydric alcohol such as a glycol or a trifunctional or tetrafunctional aliphatic alcohol with a polyisocyanate;
a polyether polyurethane polyol which is a reaction product of a polyether polyol and a polyisocyanate;
a polyester polyurethane polyol which is a reaction product of a polyester polyol and a polyisocyanate; and
each of these can be used alone or in combination of two or more kinds thereof.

Examples of the poly carboxylic acid used in the synthesis of the polyester polyol include an aromatic polybasic acid such as orthophthalic acid, terephthalic acid, isophthalic acid, phthalic anhydride, 1,4-naphthalenedicarboxylic acid, 2,5-naphthalenedicarboxylic acid, 2,6-naphthalenedicarboxylic acid, 2,3-naphthalenedicarboxylic anhydride, naphthalic acid, trimellitic acid, trimellitic anhydride, pyromellitic acid, pyromellitic anhydride, biphenyldicarboxylic acid, 1,2-bis (phenoxy) ethane-p,p'-dicarboxylic acid, benzophenonetetracarboxylic acid, benzophenonetetracarboxylic dianhydride, 5-sodium sulfoisophthalic acid, tetrachlorophthalic anhydride, and tetrabromophthalic anhydride;

a methyl ester of aromatic polybasic acid such as dimethyl terephthalate and dimethyl 2,6-naphthalene dicarboxylate;
an aliphatic polybasic acid such as malonic acid, succinic acid, succinic anhydride, glutaric acid, adipic acid, pimelic acid, suberic acid, azelaic acid, sebacic acid, fumaric acid, maleic acid, maleic anhydride, and itaconic acid;
an alkyl ester of aliphatic polybasic acid such as dimethyl malonate, diethyl malonate, dimethyl succinate, dimethyl glutarate, dimethyl adipate, diethyl pimelate, diethyl sebacate, dimethyl fumarate, diethyl fumarate, dimethyl maleate, and diethyl maleate;
an alicyclic polybasic acid such as 1,1-cyclopentane dicarboxylic acid, 1,2-cyclopentane dicarboxylic acid, 1,3-cyclopentane dicarboxylic acid, 1,2-cyclohexane dicarboxylic acid, 1,3-cyclohexane dicarboxylic acid, 1,4-cyclohexane dicarboxylic acid, tetrahydrophthalic anhydride, 4-methylhexahydrophthalic anhydride, hexahydrophthalic anhydride, cyclohexane-1,2,4-tricarboxylic acid-1,2-anhydride, himic anhydride, and het anhydride, and can be used alone or in combination of two or more kinds thereof.

The polycarboxylic acid preferably contains an aromatic polycarboxylic acid. The blending amount of the aromatic polycarboxylic acid in the polycarboxylic acid can be appropriately adjusted depending on the purpose, and is preferably 20% by mass or more as an example. It is preferably 30% by mass or more. The total amount of the polycarboxylic acid may be an aromatic polycarboxylic acid.

As the polyisocyanate used in the synthesis of the polyurethane polyol, the same ones as those exemplified as the polyisocyanate (I) can be used alone or in combination of two or more thereof.

The polyol (m) is preferably at least one selected from a polyester polyol and a polyether polyol.

The molecular weight of the polyol (m) is preferably 300 g/mol or more and 3000 g/mol or less, and more preferably 400 g/mol or more and 2000 g/mol or less.

The polyurethane polyisocyanate (A1) is obtained by reacting the polyisocyanate (I) and the polyol (m) as exemplified above under a condition in which an isocyanate group of the polyisocyanate (m) is in excess with respect to an active hydrogen group of the polyester polyol (m). The equivalent ratio [NCO]/[active hydrogen group] of the isocyanate group with respect to the active hydrogen group can be appropriately adjusted, and is 2.0 or more and 20.0 or less, as an example.

(Isocyanate Derivative (A2))

The polyisocyanate composition (X) used in the invention may contain an isocyanate derivative (A2) other than the polyurethane polyisocyanate (A1). Examples of such an isocyanate derivative (A2) include the biuret body, the nurate body, the allophanate body, the carbodiimide-modified body, the uretdione-modified body of a diisocyanate monomer such as the aromatic diisocyanate, the aromatic aliphatic diisocyanate, the aliphatic diisocyanate, and the alicyclic diisocyanate exemplified as raw materials of the polyurethane polyisocyanate (A1), and a polyurethane polyisocyanate.

When the polyisocyanate composition (X) contains the isocyanate derivative (A2), the proportion of the polyurethane polyisocyanate (A1) in the isocyanate group-containing compounds (the polyurethane polyisocyanate (A1) and the isocyanate derivative (A2)) in the polyisocyanate composition (X) is preferably 30% by mass or more. Accordingly, it is possible to form an adhesive having excellent adhesion to a metal substrate such as an aluminum foil and a vapor deposition film of aluminum.

(Acid Anhydride (B))

Examples of the acid anhydride (B) include a cyclic aliphatic acid anhydride, an aromatic acid anhydride, and an unsaturated carboxylic acid anhydride, and can be used alone or in combination of two or more kinds thereof. More specific examples thereof include maleic anhydride, phthalic anhydride, trimellitic anhydride, pyromellitic anhydride, benzophenone tetracarboxylic anhydride, dodecenyl succinic anhydride, polyadipic anhydride, polyazelaic anhydride, polysebacic anhydride, poly (ethyl octadecanedioic acid) anhydride, poly (phenyl hexadecanedioic acid) anhydride, tetrahydrophthalic anhydride, methyltetrahydrophthalic anhydride, methylhexahydrophthalic anhydride, hexahydrophthalic anhydride, methyl himic anhydride, trialkyl tetrahydrophthalic anhydride, methyl cyclohexene dicarboxylic anhydride, methyl cyclohexene tetracarboxylic anhydride, ethylene glycol bistrimellitate dianhydride, het anhydride, nadic anhydride, methylnadic anhydride, 5-(2,5-dioxotetrahydro-3-furanyl)-3-methyl-3-cyclohexane-1,2-dicarboxylic anhydride, 3,4-dicarboxy-1,2,3,4-tetrahydro-1-naphthalene succinic dianhydride, and 1-methyl-dicarboxy-1,2,3,4-tetrahydro-1-naphthalene succinic dianhydride.

As the acid anhydride (B), a compound obtained by modifying the above-mentioned compound with glycol may be used. Examples of the glycol that can be used for modification include alkylene glycols such as ethylene glycol, propylene glycol, and neopentyl glycol; and polyether glycols such as polyethylene glycol, polypropylene glycol, and polytetramethylene ether glycol. Further, a copolymerized polyether glycol of two or more of these glycols and/or polyether glycols can be used.

Alternatively, a homopolymer or copolymer of a compound having a polymerizable unsaturated group such as maleic anhydride among the above-mentioned compounds may be used as the acid anhydride (B). Examples of the compound copolymerizable with the compound having an acid anhydride group and a polymerizable unsaturated group include α-olefins such as ethylene, propylene, 1,3-butadiene, and cyclopentyl ethylene; vinyl compounds having an aromatic ring such as styrene, 1-ethynyl-4-methylbenzene, divinylbenzene, 1-ethynyl-4-methylethylbenzene, benzonitrile, acrylonitrile, ptert-butylstyrene, 4-vinyl biphenyl, 4-ethynyl benzyl alcohol, 2-ethynyl naphthalene, and phenanthrene-9-ethynyl; and fluoroolefins such as vinylidene fluoride, tetrafluoroethylene, hexafluoropropylene, and chlorotrifluoroethylene, and can be used alone or in combination of two or more kinds thereof. Styrene and p-tert-butylstyrene, which are vinyl compounds having an aromatic ring, are preferably used.

The acid anhydride (B) used in the invention is more preferably a non-aromatic carboxylic acid anhydride. Accordingly, it is possible to suppress a decrease in the adhesive strength even after the retort treatment without significantly impairing productivity in the step of dissolving the acid anhydride. Note that, in the present specification, the non-aromatic carboxylic acid anhydride refers to those in which an anhydride ring is not directly bonded to an aromatic ring, that is, a cyclic aliphatic acid anhydride, an unsaturated carboxylic acid anhydride, a glycol-modified product of these acid anhydrides, a copolymer with a compound having a polymerizable unsaturated group, and the like.

The acid anhydride (B) is used in a range in which the acid value derived from the acid anhydride (B) in the polyisocyanate composition (X) is 1 mg KOH/g or more and 100 mg KOH/g or less, and is more preferably used in a range of 5 mg KOH/g or more and 70 mg KOH/g or less. The acid value derived from the acid anhydride (B) may be obtained by calculating the acid value when the anhydride ring is opened from the structure and the addition amount of the added acid anhydride (B), or may be measured using FT-IR.

In the case of measurement using FT-IR, it is a value calculated by the following formula using a coefficient (f) obtained from a calibration curve prepared by a chloroform solution of the acid anhydride (B), an absorbance (I) of a stretching peak of an anhydride ring of the acid anhydride (B) in the polyisocyanate composition (X), and an absorbance (II) of a stretching peak of a carbonyl group when the anhydride ring of the acid anhydride (B) is opened, and the unit is mg KOH/g unless otherwise specified. In the following formula, the molecular weight of potassium hydroxide is 56.11.

[Math. 1]

$$\text{Acid Value} = \text{Absorbance (I)} \times (f) \times 2 \times \text{Molecular Weight of Potassium Hydroxide} \times 1000 \text{ (mg)}$$

$$+ \frac{\text{Absorbance (II)} \times (f) \times \text{Molecular Weight of Potassium Hydroxide} \times 1000 \text{(mg)}}{\text{Molecular Weight of Acid Anhydride (B)}}$$

In the polyisocyanate composition (X) used in the invention, the content of the diisocyanate having a molecular weight of 280 or less, that is, the diisocyanate monomer such as the aromatic diisocyanate, the aromatic aliphatic diisocyanate, the aliphatic diisocyanate, and the alicyclic diisocyanate exemplified as raw materials of the polyurethane polyisocyanate (A1) is 0.1% by mass or less.

The content of the diisocyanate monomer can be measured by gas chromatography using an internal standard, for example according to ASTM D 3432. Alternatively, it can be measured by liquid chromatography according to the following condition.

Apparatus: "ACQUITY UPLC H-Class" manufactured by Waters Corporation
Data processing: "Empower-3" manufactured by Waters Corporation
Column: "ACQUITY UPLC HSS T3" manufactured by Waters Corporation (100 mm × 2.1 mmφ, 1.8 μm) 40 °C
Eluent: Aqueous ammonium formate/methanol, 0.3 mL/minute
Detector: PDA
Sample Preparation:

    1. Dissolve 100 mg of appropriately blocked sample in 10 ml of THF (for LC)

2. Stirring with vortex for 30 seconds

3. Appropriately diluted with eluent (mobile phase)

4. Passed through a filtration filter of 0.2 μm to prepare a measurement sample.

Calculation of area ratio: It is calculated using the maximum absorption wavelength for the target substance.

The content of the diisocyanate monomer can be adjusted, for example, by removing the diisocyanate monomer from a composition containing the diisocyanate monomer using a short-path distillation apparatus or a thin-film distillation apparatus.

The polyisocyanate composition (X) is prepared by a method of adding the anhydride (B) when synthesizing the polyurethane polyisocyanate (A1) to obtain a composition containing the polyurethane polyisocyanate (A1) and the acid anhydride (B) and then removing the diisocyanate monomer using a short-path distillation apparatus or a thin film distillation apparatus, a method of heating the polyurethane polyisocyanate (A1) from which the diisocyanate monomer has been removed and the acid anhydride (B) to about 50 °C to 150 °C, or removing the diisocyanate monomer from a composition containing the polyurethane polyisocyanate (A1), the diisocyanate monomer, and the acid anhydride (B) using a short-path distillation apparatus or a thin film distillation apparatus. In any preparation method, a compound other than the polyurethane polyisocyanate (A1) and the acid anhydride (B) may be present in the system as long as the effect of the present invention is not impaired. Examples of such a compound include an isocyanate derivative (A2).

The acid anhydride (B) has been used as an additive for a solvent-type two-part curable adhesive, but most of them are solid at normal temperature. Therefore, the effect is not sufficiently exhibited by simply adding it to a solventless adhesive. When an acid anhydride (B) is added to a diisocyanate monomer in the production process of a polyurethane polyisocyanate, which is widely used as an isocyanate component of a solventless two-part curable adhesive, and the acid anhydride (B) is dissolved by heating, the decrease in strength after retort treatment is reduced, but the performance when the bag material after retort treatment is stored for a long period of time is not maintained. In the invention, such a problem is solved by using the polyurethane polyisocyanate (A1) and the acid anhydride (B) in combination and reducing the content of the diisocyanate monomer in the polyisocyanate composition (X) as much as possible, and it is possible to provide an adhesive having excellent adhesion to a metal substrate or a vapor deposition layer of a metal and excellent content resistance to acid and oil even when a bag material after retort treatment is stored for a certain period of time.

The viscosity of the polyisocyanate composition (X) is adjusted to be in a range suitable for the non-solvent lamination method. As an example, the viscosity at 40 °C is adjusted to be in a range of 100 to 20000 mPas, and more preferably 500 to 10000 mPas. As an example, the viscosity of the polyisocyanate composition (X) can be adjusted by the structure of the polyurethane polyisocyanate (A) (the polyol to be used). The viscosity of the polyisocyanate composition (X) can be measured, for example, using a rotational viscosimeter with a cone-plate: 1° × diameter 50 mm, shearing speed: 100 sec$^{-1}$, at 40 °C ± 1 °C.

(Polyol Composition (Y))

(Polyol (C))

The polyol composition (Y) contains a polyol (C). Examples of such a polyol include a polyester polyol (C1), a polyether polyol (C2), a plant oil polyol (C3), a polyurethane polyol (C4), and a sugar alcohol (C5), and can be used alone or in combination of two or more kinds thereof.

Examples of the polyester polyol (C1) include a polyester polyol that is a reaction product of a polyhydric alcohol and a polycarboxylic acid, and a lactone-based polyester polyol obtained by a polycondensation reaction of an aliphatic polyol and various lactones such as ε-caprolactone. It is preferable to use a polyester polyol which is a reaction product of a polyhydric alcohol and a polycarboxylic acid. As the polyhydric alcohol and the polycarboxylic acid, the same ones as those exemplified as the raw materials of the polyurethane polyisocyanate (A1) can be used alone or in combination of two or more kinds thereof.

The polycarboxylic acid as a raw material of the polyester polyol (C1) preferably contains an aromatic polycarboxylic acid. The blending amount of the aromatic polycarboxylic acid in the polycarboxylic acid can be appropriately adjusted depending on the purpose, and as an example, is 20% by mass or more. The total amount of the polycarboxylic acid may be an aromatic polycarboxylic acid.

The molecular weight of the polyester polyol (C1) is preferably 300 g/mol or more and 5000 g/mol or less, and more preferably 400 g/mol or more and 3000 g/mol or less.

The hydroxyl value of the polyester polyol (C1) is preferably 20 mg KOH/g or more and 400 mg KOH/g or less.

Examples of the polyether polyol (C2) include those obtained by addition polymerization of alkylene oxides such as ethylene oxide, propylene oxide, butylene oxide, styrene oxide, epichlorohydrin, tetrahydrofuran, and cyclohexylene in the presence of a polymerization initiator such as a glycol such as ethylene glycol, propylene glycol, 1,3-propanediol, 1,4-butanediol, 1,5-pentanediol, 3-methyl-1,5-pentanediol, 1,6-hexanediol, neopentyl glycol, methyl pentanediol, dimethyl butanediol, butylethyl propanediol, diethylene glycol, triethylene glycol, tetraethylene glycol, dipropylene glycol, tripropylene glycol, bis hydroxyethoxy benzene, 1,4-cyclohexanediol, 1,4-cyclohexanedimethanol, and triethylene glycol; and a trifunctional or tetrafunctional aliphatic alcohol such as glycerin, trimethylolpropane, pentaerythritol, triol of polypropylene glycol. It is preferable to use the polypropylene polyol.

The molecular weight of the polyether polyol (C2) can be appropriately adjusted, and as an example, it is preferably 300 g/mol or more and 5000 g/mol or less.

The hydroxyl value of the polyether polyol (C2) can be appropriately adjusted, and as an example, it is preferably 20 mg KOH/g or more and 500 mg KOH/g or less.

Examples of the plant oil polyol (C3) include castor oil, dehydrated castor oil, hardened castor oil which is a hydrogen additive of castor oil, and an adduct of 5 to 50 moles of alkylene oxide of castor oil.

Polyurethane polyol (C4) is the reaction product of low molecular weight or high molecular weight polyol with a polyisocyanate compound. As the low molecular weight or high molecular weight polyol, those similar to the polyhydric alcohol (n) can be used. As the polyisocyanate compound, those similar to the polyisocyanate (I) can be used.

Examples of the sugar alcohol (C5) include pentaerythrytol, sucrose, xylitol, sorbitol, isomalt, lactitol, maltitol, and mannitol.

The polyol (C) preferably includes at least one selected from the polyester polyol (C1) and the polyether polyol (C2), and more preferably include the polyester polyol (C1). When the polyol (C) includes the polyester polyol (C1), the content thereof can be appropriately adjusted, and as an example, it is preferably 20% by mass or more of the polyol (C), and more preferably 30% by mass or more. The total amount of the polyol (C) may be polyester polyol (C1).

(Amine Compound (D))

The polyol composition (Y) may contain an amine compound (D) having an amino group. Note that, in the present specification, the amino group refers to a $NH_2$ group or an NHR group (R is an alkyl group or an aryl group which may have a functional group).

As the amine compound (D), a known ones can be used without particular limitation. Examples thereof include methylene diamine, ethylene diamine, isophorone diamine, 3,9-dipropanamine-2,4,8,10-tetraoxaspirodoundecane, lysine, 2,2,4-trimethylhexamethylene diamine, hydrazine, piperazine, 2-hydroxyethyl ethylene diamine, di-2-hydroxyethyl ethylene diamine, di-2-hydroxyethyl propylene diamine, 2-hydroxypropyl ethylene diamine, di-2-hydroxypropyl ethylene diamine, poly (propylene glycol) diamine, poly (propylene glycol) triamine, poly (propylene glycol) tetramine, 1,2-diaminopropane, 1,3-diaminopropane,

1,4-diaminobutane, 1,5-diaminopentane, 1,6-diaminohexane, 1,7-diaminoheptane, 1,8-diaminooctane, 1,9-diaminononane, 1,10-diaminodecane, diethylenetriamine, dipropylenetriamine, triethylenetetramine, tripropylenetetramine, tetraethylenepentamine, tetrapropylenepentamine, pentaethylenehexamine, nonaethylenedecamine, trimethylhexamethylenediamine, tetra (aminomethyl) methane, tetrakis (2-aminoethylaminomethyl) methane, 1,3-bis (2'-aminoethylamino) propane, triethylene-bis (trimethylene) hexamine, bis (3-aminoethyl) amine, bishexamethylenetriamine, 1,4-cyclohexanediamine, 4,4'-methylenebiscyclohexylamine, 4,4'-isopropylidenebiscyclohexylamine, norbornadiamine,
bis (aminomethyl) cyclohexane, diaminodicyclohexylmethane, isophorone diamine, menthene diamine, bis (cyanoethyl) diethylenetriamine, 1,4-bis-(8-aminopropyl)-piperazine, piperazine-1,4-diazacycloheptane, 1-(2'-aminoethylpiperazine), 1-[2'-(2"-aminoethylamino) ethyl] piperazine, tricyclodecanediamine, an amine compound (D1) having a plurality of amino groups such as a polyurea amine which is a reaction product of the above-described various polyamines and the above-described various isocyanate components,
a primary or secondary alkanolamine (D2) such as monoethanol amine, monoisopropanol amine, monobutanol amine, N-methylethanol amine, N-ethylethanol amine, N-methylpropanol amine, diethanol amine, diisopropanol amine, and
a primary or secondary amine (D3) such as ethyl amine, octyl amine, lauryl amine, myristyl amine, stearyl amine, oleyl amine, diethyl amine, dibutyl amine, and distearyl amine.

Regarding the blending amount of the amine compound (D), it is preferably blended so that the amine value of the polyol composition (Y) is 20 to 100 mg KOH/g, and more preferably 25 to 70 mg KOH/g.

Note that, in the present specification, the amine value means the number of milligrams of KOH equivalent to the amount of HCl required to neutralize 1 g of a sample, is not particularly limited, and can be calculated using a known method. When the chemical structure of the amine compound (D) and, further as necessary, the average molecular weight and the like are known, it can be calculated from (the number of amino groups per one molecule/average molecular weight) $\times$ 56.1 $\times$ 1000. When the chemical structure, average molecular weight, and the like of the amine compound are unknown, it can be measured according to a known amine value measurement method, for example, JISK7237-1995.

(Monool Compound (E))

The polyol composition (Y) may contain a monool compound (E) having one alcoholic hydroxyl group. The main chain of the monool compound (E) is not particularly limited, and examples thereof include a vinyl resin, an acrylic resin, a polyester, an epoxy resin, and a urethane resin, having one hydroxyl group. In addition, an aliphatic alcohol, an alkylalkylene glycol, and the like can also be used. The main chain of the monool compound (E) may be linear or branched. The bonding position of the hydroxyl group is not particularly limited, and the hydroxyl group is preferably present at the terminal of the molecular chain.

Specific examples of the monool compound (E) include an aliphatic monool such as methanol, ethanol, propanol, butanol, pentanol, hexanol, heptanol, octanol, nonanol, decanol lauryl alcohol, myristyl alcohol, pentadecanol, cetyl alcohol, heptadecanol, stearyl alcohol, nonadecanol, other alkanols (C20 to 50), oleyl alcohol, and an isomer thereof;

an alicyclic monool such as cyclohexanol, methylcyclohexanol, 4-butylcyclohexanol, 4-pentylcyclohexanol, 4-hexylcyclohexanol, cyclodecanol, cyclododecanol, cyclopentadecanol, 4-isopropylcyclohexanol, 3,5,5-trimethylcyclohexanol, menthol, 2-norbornanol, borneol, 2-adamantanol, dicyclohexylmethanol, decatol, 2-cyclohexylcyclohexanol, 4-cyclohexylcyclohexanol, 4-(4-propylcyclohexyl) cyclohexanol, 4-(4-pentylcyclohexyl) cyclohexanol, α-ambrinol, desoxycorticosterone, 11-dehydrocorticosterone, cholesterol, β-sitosterol, campesterol, stigmasterol, brassicasterol, lanosterol, ergosterol, β-cholestanol, testosterone, estrone, digitoxigenin, dehydroepiandrosterone, coprostanol, pregnenolone, epicholestanol, 7-dehydrocholesterol, estradiol benzoate, tigogenin, hecogenin, methanedienone, cortisone acetate, stenolone, and an isomer thereof;

an aromatic aliphatic monool such as benzyl alcohol; and

a polyoxy alkylene monool obtained by ring-opening addition polymerization of an alkylene oxide such as ethylene oxide, propylene oxide, butylene oxide, or tetrahydrofuran with an alkyl compound containing one active hydrogen as an initiator.

The viscosity of the polyol composition (Y) is adjusted to be in a range suitable for the non-solvent lamination method. As an example, the viscosity at 40 °C is adjusted to be in the range of 100 to 50000 mPas, and more preferably 100 to 30000 mPas. The viscosity of the polyol composition (Y) can be adjusted by the skeleton of the polyol (C), a plasticizer mentioned below, or the like. For example, when it is adjusted by the skeleton of a polyester polyol (C1), the viscosity can be reduced by using a polyester polyol obtained by the reaction of the aliphatic carboxylic acid with the polyol. Alternatively, the viscosity can be increased by using the polyester polyol (C1) obtained by the reaction of the aromatic carboxylic acid with the polyol.

(Other Components of Adhesive)

The two-part curable adhesive of the invention may contain a component other than the components mentioned above. The other components may be contained in either or both of the polyisocyanate composition (X) and the polyol composition (Y), or may be prepared separately from these and mixed with the polyisocyanate composition (X) and the polyol composition (Y) immediately before application of the adhesive and used. Hereinafter, each component is described.

(Catalyst)

Examples of the catalyst include a metal-based catalyst, an amine-based catalyst, an aliphatic cyclic amide compound, and a quaternary ammonium salt.

Examples of the metal-based catalyst include metal complex-based, inorganic metal-based, and organic metal-based catalysts. Examples of the metal complex-based catalyst include an acetylacetonate salt of a metal selected from the group consisting of Fe (iron), Mn (manganese), Cu (copper), Zr (zirconium), Th (thorium), Ti (titanium), Al (aluminum), and Co (cobalt), for example, iron acetylacetonate, manganese acetylacetonate, copper acetylacetonate, and zirconia acetylacetonate are exemplified.

Examples of the inorganic metal-based catalyst include those selected from Sn, Fe, Mn, Cu, Zr, Th, Ti, Al, and Co.

Examples of the organic metal-based catalyst include an organic zinc compound such as zinc octylate, zinc neodecanoate, and zinc naphthenate, an organic tin compound such as stannous diacetate, stannous dioctoate, stannous dioleate, stannous dilaurate, dibutyltin diacetate, dibutyltin dilaurate, dioctyltin dilaurate, dibutyltin oxide, and dibutyltin dichloride, an organic nickel compound such as nickel octylate and nickel naphthenate, an organic cobalt compound such as cobalt octylate and cobalt naphthenate, an organic bismuth compound such as bismuth octylate, bismuth neodecanoate, and bismuth naphthenate, and a titanium-based compound such as tetraisopropyl oxytitanate, dibutyltitanium dichloride, tetrabutyl titanate, butoxytitanium trichloride, and a titanium chelate complex having at least one of an aliphatic diketone, an aromatic diketone, and an alcohol having 2 to 10 carbon atoms, as a ligand.

Examples of the amine-based catalyst include triethylenediamine, 2-methyltriethylene diamine, quinuclidine, 2-methyl quinuclidine, N,N,N',N'-tetramethylethylene diamine, N,N,N',N'-tetramethylpropylene diamine, N,N,N',N'',N''-pentamethyldiethylene triamine, N,N,N',N'',N''-pentamethyl-(3-aminopropyl)ethylene diamine, N,N,N',N'',N''-pentamethyldipropylene triamine, N,N,N',N''-tetramethylhexamethylene diamine, bis (2-dimethylaminoethyl) ether, dimethylethanolamine, dimethylisopropanolamine, dimethylaminoethoxyethanol, N,N-dimethyl-N'-(2-hydroxyethyl) ethylene diamine, N,N-dimethyl-N'-(2-hydroxyethyl) propane diamine, bis (dimethylaminopropyl) amine, bis (dimethylaminopropyl) isopropanolamine, 3-quinuclidinol, N,N,N',N'-tetramethyl guanidine, 1,3,5-tris (N,N-dimethylaminopropyl) hexahydro-S-triazine, 1,8-diazabicyclo [5.4.0] undecene-7, N-methyl-N'-(2-dimethylaminoethyl) piperazine, N,N'-dimethylpiperazine, dimethylcyclohexylamine, N-methylmorpholine, N-ethylmorpholine, 1-methylimidazole, 1,2-dimethylimidazole, 1-isobutyl-2-methylimidazole, 1-dimethylaminopropylimidazole, N,N-dimethylhexanolamine, N-methyl-N'-(2-hydroxyethyl) piperazine, 1-(2-hydroxyethyl) imidazole, 1-(2-hydroxypropyl) imidazole, 1-(2-hydroxyethyl)-2-methylimidazole, and 1-(2-hydroxypropyl)-2-methylimidazole.

Examples of the aliphatic cyclic amide compound include δ-valerolactam, ε-caprolactam, ω-enantholactam, η-capryllactam, and β-propiolactam. Among these, ε-caprolactam is more effective in accelerating curing.

Examples of the quaternary ammonium salt include a hydroxy salt, an alkyl acid salt, and a halide salt of alkylammonium and aromatic ammonium. Examples thereof include tetramethylammonium hydroxide, tetraethylammonium hydroxide, tetrapropylammonium hydroxide, tetrabutylammonium hydroxide, benzyltrimethylammonium hydroxide, tetrabutylammonium fluoride, tetrabutylammonium chloride, tetrabutylammonium bromide, tetrabutylammonium iodide, benzyltriethylammonium chloride, and hexadecyltrimethylammonium bromide, but are not limited thereto.

(Coupling Agent)

Examples of the coupling agent include a silane coupling agent, a titanate-based coupling agent, and an aluminum-based coupling agent.

Examples of the silane coupling agent include an aminosilane such as γ-aminopropyltriethoxysilane, γ-aminopropyltrimethoxysilane, N-β(aminoethyl)-γ-aminopropyltrimethoxysilane, N-β (aminoethyl)-γ-aminopropyltrimethyldimethoxysilane, N-phenyl-γ-aminopropyltrimethoxysilane, bis [3-(trimethoxysilyl) propyl] amine, and bis [3-(triethoxysilyl) propyl] amine; an epoxysilane such as β-(3,4-epoxycyclohexyl) ethyltrimethoxysilane, γ-glycidoxypropyltrimethoxysilane, and γ-glycidoxypropyltriethoxysilane; a vinylsilane such as vinyl tris (β-methoxyethoxy) silane, vinyltriethoxysilane, vinyltrimethoxysilane, and γ-methacryloxypropyltrimethoxysilane; hexamethyldisilazane, and γ-mercaptopropyltrimethoxysilane.

Examples of the titanate-based coupling agent include tetraisopropoxy titanium, tetra-n-butoxy titanium, butyl titanate dimer, tetrastearyl titanate, titanium acetylacetonate, titanium lactate, tetraoctylene glycol titanate, titanium lactate, and tetrastearoxy titanium.

Examples of the aluminum-based coupling agent include acetoalkoxyaluminum diisopropylate.

(Pigment)

The pigment is not particularly limited, and examples thereof include an organic pigment and inorganic pigment such as an extender pigment, a white pigment, a black pigment, a gray pigment, a red pigment, a brown pigment, a green pigment, a blue pigment, a metal powder pigment, a luminescent pigment, and a pearl color pigment described in Handbook of Paint Raw Materials, 1970 edition (edited by Japan Paint Manufacturers Association), and further, a plastic pigment.

Examples of the extender pigment include precipitated barium sulfate, Paris white, precipitated calcium carbonate, calcium bicarbonate, Kansuiseki, alumina white, silica, hydrous fine silica (white carbon), ultrafine anhydrous silica (aerosil), Keisha (silica sand), talc, precipitated magnesium carbonate, bentonite, clay, kaolin, and ocher.

Specific examples of the organic pigment include various non-soluble azo pigments such as Benzidine Yellow, Hansa Yellow, and Lake Red 4R; soluble azo pigments such as Lake Red C, Carmine 6B, and Bordeaux 10; various (copper) phthalocyanine-based pigments such as Phthalocyanine Blue and Phthalocyanine Green; various chlorine-based dyeing lake such as Rhodamine Lake and Methyl Violet Lake; various mordant dye-based pigments such as Quinoline Lake and Fast Sky Blue; various vat dye-based pigments such as an anthraquinone-based pigment, thioindigo-based pigments, and perinone-based pigments; various quinacridone-based pigments such as Cinquasia Red B; various dioxazine-based pigments such as Dioxazine Violet; various condensed azo pigments such as Cromophtal; and Aniline Black.

Examples of the inorganic pigment include various chromates such as chrome yellow, zinc chromate, and molybdate orange; various ferrocyanide compounds such as iron blue; various metal oxides such as titanium oxide, Chinese white, Mapico Yellow, iron oxide, red iron oxide, chromium oxide green, and zirconium oxide; various sulfides or selenides such as cadmium yellow, cadmium red, and mercury sulfide; various sulfates such as barium sulfate and lead sulfate; various silicates such as calcium silicate and ultramarine; various carbonates such as calcium carbonate and magnesium carbonate; various phosphates such as cobalt violet and manganese violet; various metal powder pigments such as aluminum powder, gold powder, silver powder, copper powder, bronze powder, and brass powder; flake pigments and mica flake pigments of these metals; metallic pigments and pearl pigments such as mica flake pigments having a shape in which a metal oxide is coated and mica-shape iron oxide pigments; and graphite and carbon black.

Examples of the plastic pigment include "Grandoll PP-1000" and "PP-2000S" manufactured by DIC Corporation.

The pigment to be used may be appropriately selected according to the purpose, and for example, from the viewpoint of excellent durability, weather resistance, and designability, an inorganic oxide such as titanium oxide and Chinese white is preferably used as the white pigment, and carbon black is preferably used as the black pigment.

The blending amount of the pigment is, as an example, 1 to 400 parts by mass with respect to 100 parts by mass of the total amount of the non-volatile components of the polyisocyanate composition (X) and the polyol composition (Y), and is more preferably 10 to 300 parts by mass in order to further improve the adhesiveness and the blocking resistance.

(Plasticizer)

Examples of the plasticizer include a phthalic acid-based plasticizer, a fatty acid-based plasticizer, an aromatic polycarboxylic acid-based plasticizer, a phosphoric acid-based plasticizer, a polyol-based plasticizer, an epoxy-based plasticizer, a polyester-based plasticizer, and a carbonate-based plasticizer.

Examples of the phthalic acid-based plasticizer include a phthalate ester-based plasticizer such as dimethyl phthalate, diethyl phthalate, dibutyl phthalate, diisobutyl phthalate, dihexyl phthalate, diheptyl phthalate, di-(2-ethylhexyl) phthalate, di-n-octyl phthalate, dinonyl phthalate, diisononyl phthalate, didecyl phthalate, diisodecyl phthalate, ditridecyl phthalate, diundecyl phthalate, dilauryl phthalate, distearyl phthalate, diphenyl phthalate, dibenzyl phthalate, butylbenzyl phthalate, dicyclohexyl phthalate, octyldecyl phthalate, dimethyl isophthalate, di-(2-ethylhexyl) isophthalate, and diisooctyl isophthalate, and a tetrahydrophthalate ester-based plasticizer such as di-(2-ethylhexyl) tetrahydrophthalate, di-n-octyl tetrahydrophthalate, and diisodecyl tetrahydrophthalate.

Examples of the fatty acid-based plasticizer include an adipic acid-based plasticizer such as di-n-butyl adipate, di-(2-ethylhexyl) adipate, diisodecyl adipate, diisononyl adipate, di (C6 to C10 alkyl) adipate, and dibutyl diglycol adipate, an azelaic acid-based plasticizer such as di-n-hexyl azelate, di-(2-ethylhexyl) azelate, and diisooctyl azelate, a sebacic acid-based plasticizer such as di-n-butyl sebacate, di-(2-ethylhexyl) sebacate, and diisononyl sebacate; a maleic acid-based plasticizer such as dimethyl maleate, diethyl maleate, di-n-butyl maleate, and di-(2-ethylhexyl) maleate; a fumaric acid-based plasticizer such as di-n-butyl fumarate, and di-(2-ethylhexyl) fumarate, an itaconic acid-based plasticizer such as monomethyl itaconate, monobutyl itaconate, dimethyl itaconate, diethyl itaconate, dibutyl itaconate, and di-(2-ethylhexyl) itaconate; a stearic acid-based plasticizer such as n-butyl stearate, glycerin monostearate, and diethylene glycol distearate, an oleic acid-based plasticizer such as butyl oleate, glyceryl monooleate, and diethylene glycol monooleate, a citric acid-based plasticizer such as triethyl citrate, tri-n-butyl citrate, acetyl triethyl citrate, acetyl tributyl citrate, and acetyl tri-(2-ethylhexyl) citrate; a ricinoleic acid-based plasticizer such as methyl acetyl ricinoleate, butyl acetyl ricinoleate, glyceryl monoricinoleate, and diethylene glycol monoricinoleate; and other fatty acid-based plasticizers such as diethylene glycol monolaurate, diethylene glycol dipelargonate, and pentaerythrytol fatty acid ester.

Examples of the aromatic polycarboxylic acid-based plasticizer include a trimellitic acid-based plasticizer such as tri-n-hexyl trimellitate, tri-(2-ethylhexyl) trimellitate, tri-n-octyl trimellitate, triisooctyl trimellitate, triisononyl trimellitate, tridecyl trimellitate, and triisodecyl trimellitate; and a pyromellitic acid-based plasticizer such as tetra-(2-ethylhexyl) pyromellitate and tetra-n-octyl pyromellitate.

Examples of the phosphoric acid-based plasticizer include triethyl phosphate, tributyl phosphate, tri-(2-ethylhexyl) phosphate, tributoxyethyl phosphate, triphenyl phosphate, octyldiphenyl phosphate, cresyldiphenyl phosphate, cresylphenyl phosphate, tricresyl phosphate, trixylenyl phosphate, tris (chloroethyl) phosphate, tris (chloropropyl) phosphate, tris (dichloropropyl) phosphate, and tris (isopropylphenyl) phosphate.

Examples of the polyol-based plasticizer include a glycol-based plasticizer such as diethylene glycol dibenzoate, dipropylene glycol dibenzoate, triethylene glycol dibenzoate, triethylene glycol di-(2-ethylbutyrate), triethylene glycol di-(2-ethylhexoate), and dibutyl methylene bisthioglycolate; and a glycerin-based plasticizer such as glycerol monoacetate, glycerol triacetate, and glycerol tributyrate.

Examples of the epoxy-based plasticizer include epoxidized soybean oil, epoxybutyl stearate, di-2-ethylhexyl epoxyhexahydrophthalate, diisodecyl epoxyhexahydrophthalate, epoxy triglyceride, epoxidized octyl oleate, and epoxidized decyl oleate.

Examples of the polyester-based plasticizer include an adipic acid-based polyester, a sebacic acid-based polyester, and a phthalic acid-based polyester.

Examples of the carbonate-based plasticizer include propylene carbonate and ethylene carbonate.

Further, other examples of the plasticizer include a partially hydrogenated terphenyl, an adhesive plasticizer, and a polymerizable plasticizer such as diallyl phthalate, am acrylic monomer and oligomer. These plasticizers can be used alone or in combination of two or more kinds thereof.

(Phosphoric Acid Compound)

Examples of the phosphoric acid compound include phosphoric acid, pyrophosphoric acid, triphosphoric acid, methyl acid phosphate, ethyl acid phosphate, butyl acid phosphate, dibutyl phosphate, 2-ethylhexyl acid phosphate, bis (2-ethylhexyl) phosphate, isododecyl acid phosphate, butoxyethyl acid phosphate, oleyl acid phosphate, tetracosyl acid phosphate, 2-hydroxyethyl methacrylate acid phosphate, and polyoxyethylene alkyl ether phosphoric acid.

(Form of Adhesive)

The two-part curable adhesive of the invention is used in a solventless form. Note that, in the present specification, the "solventless" adhesive refers to a form of an adhesive used in a method in which the polyisocyanate composition (X) and the polyol composition (Y) do not substantially contain esters such as ethyl acetate, butyl acetate, and cellosolve acetate, ketones such as acetone, methyl ethyl ketone, isobutyl ketone, and cyclohexanone, ethers such as tetrahydrofuran and dioxane, aromatic hydrocarbons such as toluene and xylene, halogenated hydrocarbons such as methylene chloride and ethylene chloride, and organic solvents having high solubility such as dimethyl sulfoxide and dimethyl sulfonamide, particularly ethyl acetate or methyl ethyl ketone, and the adhesive is applied to a substrate and then bonded to another substrate without passing through a step of volatilizing the solvent by heating in an oven or the like, that is, a so-called non-solvent lamination method. When the constituent component of the polyisocyanate composition (X) or the polyol composition (Y) and the organic solvent used as a reaction medium during the production of the raw material thereof are not completely removed, and a trace amount of the organic solvent remains in the polyisocyanate composition (X) and the polyol composition (Y), it is understood that the organic solvent is not substantially contained. In addition, when the polyol composition (Y) contains a low molecular weight alcohol, the low molecular weight alcohol reacts with the polyisocyanate composition (X) to become a part of a coating film, and therefore, it is not necessary to volatilize it after coating. Therefore, such a form is also treated as a solventless adhesive, and a low molecular weight alcohol is not considered to be an organic solvents.

The two-part curable adhesive of the invention is preferably used by blending so that the ratio [NCO]/[OH] of the number of moles of isocyanate group [NCO] contained in the polyisocyanate composition (X) to the number of moles of hydroxyl group [OH] contained in the polyol composition (Y) is 1.0 to 5.0. This makes it possible to obtain appropriate curability without depending on the environmental humidity during coating.

<Other Applications>

The polyisocyanate composition (X) mentioned above is suitable for a solventless two-part curable adhesive for bonding a metal foil such as an aluminum foil or a substrate having a vapor deposition layer of a metal such as aluminum to a plastic film, but can also be used for other applications. For example, it can be used as a two-part curable coating agent in combination with a composition containing a compound having reactivity with an isocyanate group (isocyanate-reactive composition). Such a coating agent is excellent in adhesion to a metal substrate such as a steel plate.

As the compound having reactivity with an isocyanate group, a conventionally known compound can be used, and it is not particularly limited. However, as an example, a polyol such as a polyester polyol, a polyether polyol, a polycarbonate polyol, and an acrylic polyol, a compound having an epoxy group such as a bisphenol A-type epoxy resin, a compound having a primary or secondary amino group, a polyolefin modified with a compound having an acid group and a polymerizable unsaturated group such as maleic anhydride and (meth) acrylic acid, and a compound having an acid group such as a copolymer of a compound having an acid group and a polymerizable unsaturated group and a compound having an unsaturated double bond are exemplified, and these compounds can be used alone or in combination of two or more kinds thereof.

<Laminate>

The laminate of the invention is obtained by, for example, a method having a two liquid mixing step of mixing the polyisocyanate composition (X) and the polyol composition (Y) in advance, then applying the mixture to a first substrate, then laminating a second substrate on the applied surface, and curing the adhesive layer, or a method having a two liquid separation coating step of separately applying the polyisocyanate composition (X) and the polyol composition (Y) to a first substrate and a second substrate, then laminating the first substrate and the second substrate by bringing the respective applied surfaces into contact with each other and pressure-bonding them, and curing the adhesive layer. The film to be used is not particularly limited, and a film according to the application can be appropriately selected.

Examples of the film for food packaging include a polyethylene terephthalate (PET) film, a polystyrene film, a polyamide film, a polyacrylonitrile film, a polyethylene film (LLDPE: low density polyethylene film, HDPE: high density polyethylene film, MDOPE: uniaxially stretched polyethylene film, OPE: biaxially stretched polyethylene film), a polypropylene film (CPP: unstretched polypropylene film, OPP: biaxially stretched polypropylene film), and a polyolefin film, a polyvinyl alcohol film and an ethylene-vinyl alcohol copolymer film such as a gas barrier heat seal film in which an olefin-based heat sealable resin layer is provided on one surface or both surfaces of a resin having gas barrier properties such as an ethylene vinyl alcohol copolymer or polyvinyl alcohol.

Further, it is also preferable to use a biomass film, a biodegradable film, or a recycled plastic film formed of a material containing a biomass-derived component, a biodegradable component, or a recycled component.

Biomass films, biodegradable films, and recycled plastic films are commercially available from various companies, and for example, films certified in various countries, such as film sheets listed in the list of biomass-certified products described in the Japan Organic Recycling Association, films listed in the list of Ecomark-certified products described in the Japan Environment Association, and films having a symbol mark defined by the Japan Bioplastics Association can be used.

(Biomass Film)

Specific examples of the well-known biomass film include a film made from ethylene glycol derived from biomass as a raw material. The biomass-derived ethylene glycol is derived from ethanol (biomass ethanol) produced from biomass as a raw material. For example, biomass-derived ethylene glycol can be obtained from biomass ethanol by a method of producing ethylene glycol via ethylene oxide by a conventionally known method. In addition, commercially available biomass ethylene glycol may be used, and for example, biomass ethylene glycol commercially available from India Glycols Limited can be suitably used.

For example, as an alternative to a conventional polyethylene terephthalate film using a petroleum-based raw material, a film containing a biomass polyester, a biomass polyethylene terephthalate, or the like in which ethylene glycol derived from biomass is a diol unit and a dicarboxylic acid derived from a fossil fuel is a dicarboxylic acid unit is known.

As the dicarboxylic acid unit of the biomass polyester, a dicarboxylic acid derived from a fossil fuel is used. As the dicarboxylic acid, an aromatic dicarboxylic acid, an aliphatic dicarboxylic acid, and a derivative thereof can be used without limitation.

Further, in addition to the diol component and the dicarboxylic acid component described above, it may be a copolymerized polyester obtained by adding a copolymerization component as a third component such as a bifunctional oxycarboxylic acid, or at least one polyfunctional compound selected from the group consisting of a trifunctional or higher polyhydric alcohol, a trifunctional or higher polycarboxylic acid and/or an anhydride thereof, and a trifunctional or higher oxycarboxylic acid in order to form a crosslinked structure.

In addition, for example, as an alternative to a polyolefin-based film using a conventional petroleum-based raw material, a biomass polyolefin-based film such as a biomass polyethylene-based film or a biomass polyethylene-polypropylene-based film, containing a polyethylene-based resin made from ethylene glycol derived from biomass as a raw material is also known.

The polyethylene-based resin is not particularly limited as long as the biomass-derived ethylene glycol is used as a part of the raw material, and examples thereof include a homopolymer of ethylene and a copolymer of ethylene and an $\alpha$-olefin having ethylene as a main component (an ethylene-$\alpha$-olefin copolymer containing 90% by mass or more of an ethylene unit), and each of these can be used alone or in combination of two or more kinds thereof.

Note that, the $\alpha$-olefin constituting the copolymer of ethylene and an $\alpha$-olefin is not particularly limited, and examples thereof include an $\alpha$-olefin having 4 to 8 carbon atoms such as 1-butene, 4-methyl-1-pentene, 1-hexene, and 1-octene. A known polyethylene resin such as a low density polyethylene resin, a medium density polyethylene resin, and a linear low density polyethylene resin can be used. Among these, a linear low density polyethylene resin (LLDPE) (a copolymer of ethylene and 1-hexene or a copolymer of ethylene and 1-octene) is preferable, and a linear low density polyethylene resin having a density of 0.910 to 0.925 g/cm$^3$ is more preferable, from the viewpoint of further reducing the occurrence of damage such as a punched hole or tearing even when the films are rubbed against each other.

As the biomass film, films using a biomass raw material classified according to the biomass plastic degree specified in ISO16620 or ASTMD6866 are also distributed. In the atmosphere, the radiocarbon 14C is present at a ratio of 1 in 1012, and since this ratio does not change even with carbon dioxide in the atmosphere, this ratio does not change even in a plant in which this carbon dioxide is fixed by photosynthesis. Therefore, the carbons of the plant-derived resin include a radioactive carbon 14C. In contrast, the carbons of the fossil fuel-derived resin contain very little radiocarbon 14C. Therefore, by measuring the concentration of the radiocarbon 14C in the resin with an accelerator mass spectrometer, the content ratio of the plant-derived resin in the resins, that is, the biomass plastic degree can be determined.

Examples of the plant-derived low density polyethylene, which is a biomass plastic having the biomass plastic degree defined by ISO16620 or ASTM D6866 of 80% or more, and preferably 90% or more, include trade names "SBC818", "SPB608", "SBF0323HC", "STN7006", "SEB853", and "SPB681" manufactured by Braskem, and a film using these as a raw material can be suitably used.

In addition, films and sheets in which starch or polylactic acid as a biomass raw material is blended are also known. These can be appropriately selected and used according to the application.

The biomass film may be a laminate obtained by laminating a plurality of biomass films, or may be a laminate of a conventional petroleum-based film and a biomass film. Further, the biomass film may be an unstretched film or a stretched film, and the production method thereof is not limited.

(Biodegradable Film)

Specific examples of the well-known biodegradable film include a film made from a commonly available biodegradable resin as a raw material. Examples thereof include polycaprolactone, polyvinyl alcohol, polyamide, cellulose ester, a lactic acid-based polyester-based resin, an aliphatic polyester-based resin, and an aliphatic aromatic polyester-based resin. These biodegradable resins may be used alone or in combination of two or more kinds thereof. Among these, an aliphatic polyester-based resin or an aliphatic aromatic polyester-based resin is preferably used.

Examples of the aliphatic polyester-based resin include an aliphatic polyester obtained by a polycondensation reaction of an aliphatic diol and an aliphatic dicarboxylic acid. Examples of the aliphatic diol include ethylene glycol, 1,3-propanediol, 1,4-butanediol, 1,5-pentanediol, 1,6-hexanediol, 1,4-cyclohexanediol, and 1,4-cyclohexanedimethanol. These may be used alone or as a mixture thereof. Among these, 1,4-butanediol is preferably used. Examples of the aliphatic dicarboxylic acid include oxalic acid, succinic acid, glutaric acid, adipic acid, sebacic acid, suberic acid, and dodecanedioic acid, and an acid anhydride which is a derivative thereof may be used. Among these, succinic acid or succinic anhydride, or a mixture thereof with adipic acid is preferable.

Specific examples thereof include polybutylene succinate (PBS) obtained from 1,4-butanediol and succinic acid (for example, BioPBS manufactured by PPT MCC Biochem Co., Ltd.), and polybutylene succinate adipate (PBSA) obtained by copolymerizing adipic acid with PBS.

Examples of the aliphatic aromatic polyester-based resin include a copolymer containing an aliphatic dicarboxylic acid unit, an aromatic dicarboxylic acid unit, and a chain aliphatic and/or alicyclic diol unit. The diol component providing the diol unit usually has 2 to 10 carbon atoms, and examples thereof include ethylene glycol, 1,3-propanediol, 1,4-butanediol, and 1,4-cyclohexanedimethanol. Among these, a diol having 2 to 4 carbon atoms is preferable, ethylene glycol and 1,4-butanediol are preferable, and 1,4-butanediol is more preferable. The dicarboxylic acid component providing the dicarboxylic acid unit usually has 2 to 10 carbon atoms, and examples thereof include succinic acid, adipic acid, suberic acid, sebacic acid, and dodecanedioic acid. Among these, succinic acid or adipic acid is preferable. Examples of the aromatic dicarboxylic acid component providing the aromatic dicarboxylic acid unit include terephthalic acid, isophthalic acid, and naphthalenedicarboxylic acid. Among these, terephthalic acid and isophthalic acid are preferable, and terephthalic acid is more preferable.

Specific examples thereof include PBAT which is a copolymer of 1,4-butanediol, adipic acid, and terephthalic acid (for example, Ecoflex manufactured by BASF).

Other examples thereof include poly (3-hydroxyalkanoate) of an aliphatic polyester copolymer obtained from hydroxyalkanoic acid and polycarboxylic acid (among them, poly (3-hydroxybutyrate-co-3-hydroxyhexanoate) (PHBH) (for example, AONILEX, manufactured by Kaneka Corporation), and polylactic acid (PLA) (for example, REVODE, manufactured by Zhejiang Hisun Biomaterials Co., Ltd., and Ingeo, manufactured by NatureWorks LLC.).

The biodegradable film may be a laminate obtained by laminating a plurality of biodegradable films, or may be a laminate of a conventional petroleum-based film and a biodegradable film. Further, the biodegradable film may be an unstretched film or a stretched film, and the production method thereof is not limited.

The film may be subjected to stretching treatment. As the stretching treatment method, it is common that a resin is melt-extruded into a sheet shape by an extrusion film forming method or the like, and then simultaneous biaxial stretching or sequential biaxial stretching is performed. Further, in the case of sequential biaxial stretching, it is common to first perform longitudinal stretching and then perform transverse stretching. Specifically, a method of combining longitudinal stretching utilizing a speed difference between rolls and transverse stretching using a tenter is often used.

The surface of the film may be subjected to various surface treatment such as flaming treatment and corona discharging treatment, as necessary, so as to form an adhesive layer without a defect such as film breakage and cissing.

Alternatively, a film obtained by laminating a vapor deposition layer of a metal such as aluminum or a metal oxide such as silica or alumina, or a barrier film containing a gas barrier layer of polyvinyl alcohol, an ethylene-vinyl alcohol copolymer, vinylidene chloride, or the like may be used in combination. By using such a film, a laminate having barrier properties against water vapor, oxygen, alcohol, inert gas, a volatile organic substance (fragrance), and the like can be formed.

As the paper, a known paper substrate can be used without particular limitation. Specifically, it is produced by a known paper machine using natural fiber for papermaking such as wood pulp, and the papermaking condition is not particularly limited. Examples of the natural fiber for papermaking include wood pulp such as softwood pulp and hardwood pulp, non-wood pulp such as abaca pulp, sisal pulp, and flax pulp, and pulp obtained by chemically modifying these pulps. As the kind of pulp, chemical pulp, ground pulp, chemi-mechanical pulp, thermomechanical pulp, and the like obtained by a sulfate-pulping method, an acidic-neutral-alkaline sulfite-pulping method, a soda-salt pulping method, or the like can be used. In addition, various commercially available high-quality paper, coated paper, backing paper, impregnated paper, cardboard, paperboard, and the like can also be used.

Examples of more specific configuration of the laminate include:

(1) Substrate 1/adhesive layer 1/sealant film,
(2) Substrate 1/adhesive layer 1/metal deposition unstretched film,
(3) Substrate 1/adhesive layer 1/metal deposition stretched film,
(4) Transparent vapor deposition stretched film/adhesive layer 1/sealant film,
(5) Substrate 1/adhesive layer 1/ substrate 2/adhesive layer 2/sealant film,
(6) Substrate 1/adhesive layer 1/metal deposition stretched film/adhesive layer 2/sealant film,
(7) Substrate 1/adhesive layer 1/transparent vapor deposition stretched film/adhesive layer 2/sealant film,
(8) Substrate 1/adhesive layer 1/metal layer/adhesive layer 2/sealant film,
(9) Substrate 1/adhesive layer 1/substrate 2/adhesive layer 2/metal layer/adhesive layer 3/sealant film, and
(10) Substrate 1/adhesive layer 1/metal layer/adhesive layer 2/substrate 2/adhesive layer 3/sealant film,

but are not limited thereto.

Examples of the substrate 1 used in the configuration (1) include an MDOPE film, an OPE film, an OPP film, a PET film, a nylon film, and paper. In addition, as the substrate 1, a substrate to which coating is applied for the purpose of improving gas barrier properties, ink receptivity when a print layer to be mentioned below is provided, or the like may be used. Examples of a commercially available product of the coated substrate film 1 include a K-OPP film, a K-PET film, and a K-nylon film. The adhesive layer 1 is a cured coating film of the adhesive of the invention. Examples of the sealant film include a CPP film, an LLDPE film, an easily openable heat seal film, and a gas barrier heat seal film. A print layer may be provided on the surface of the substrate 1 on the adhesive layer 1 side (in the case of using a coated substrate film as the substrate film 1, the surface of the coating layer on the adhesive layer 1 side) or on the surface opposite to the adhesive layer 1. The print layer is formed by a general printing method conventionally used for printing on a polymer film or paper, with various printing inks such as gravure ink, flexographic ink, offset ink, stencil ink, and inkjet ink.

Examples of the substrate 1 used in the configurations (2) and (3) include an MDOPE film, an OPE film, an OPP film, a PET film, and paper. The adhesive layer 1 is a cured coating film of the adhesive of the invention. As the metal deposition unstretched film, a VM-CPP film, a VM-LLDPE film, or the like, obtained by depositing a metal such as aluminum on a CPP film, an LLDPE film, or a gas barrier heat seal film can be used, and as the metal deposition stretched film, a VM-MDOPE film, a VM-OPE film, or a VM-OPP film, obtained by depositing a metal such as aluminum on an MDOPE film, an OPE film, or an OPP film can be used. As in the configuration (1), a print layer may be provided on either surface of the substrate 1.

Examples of the transparent vapor deposition stretched film used in the configuration (4) include a film obtained by vapor-depositing silica or alumina on an MDOPE film, an OPE film, an OPP film, a PET film, or a nylon film. For the purpose of protecting the inorganic vapor deposition layer of silica or alumina, a film with coating on the vapor deposition layer may be used. The adhesive layer 1 is a cured coating film of the adhesive of the invention. Examples of the sealant film include the same as those in the configuration (1). A print layer may be provided on the surface of the transparent vapor deposition stretched film on the adhesive layer 1 side (in the case of using a film obtained by applying a coating on an inorganic vapor deposition layer, the surface of the coating layer on the adhesive layer 1 side). The method for forming the print layer is the same as in the configuration (1).

Examples of the substrate 1 used in the configuration (5) include a PET film and paper. Examples of the substrate 2 include a nylon film. At least one of the adhesive layer 1 and the adhesive layer 2 is a cured coating film of the adhesive of the invention. Examples of the sealant film include the same as those in the configuration (1). As in the configuration (1), a print layer may be provided on either surface of the substrate 1.

Examples of the substrate 1 of the configuration (6) include the same as those in the configurations (2) and (3). Examples of the metal deposition stretched film include a VM-MDOPE film, a VM-OPE film, a VM-OPP film, and a VM-PET film, obtained by depositing a metal such as aluminum on an MDOPE film, an OPE film, an OPP film, or a PET film. At least one of the adhesive layer 1 and the adhesive layer 2 is a cured coating film of the adhesive of the invention. Examples of the sealant film include the same as those in the configuration (1). As in the configuration (1), a print layer may be provided on either surface of the substrate 1.

Examples of the substrate 1 of the configuration (7) include a PET film and paper. Examples of the transparent vapor deposition stretched film include the same as those in the configuration (4). At least one of the adhesive layers 1 and 2 is a cured coating film of the adhesive of the invention. Examples of the sealant film include the same as those in the configuration (1). As in the configuration (1), a print layer may be provided on either surface of the substrate 1.

Examples of the substrate 1 of the configuration (8) include a PET film and paper. Examples of the metal layer include an aluminum foil. At least one of the adhesive layers 1 and 2 is a cured coating film of the adhesive of the invention. Examples of the sealant film include the same as those in the configuration (1). As in the configuration (1), a print layer may be provided on either surface of the substrate 1.

Examples of the substrate 1 of the configurations (9) and (10) include a PET film and paper. Examples of the substrate 2 include a nylon film. Examples of the metal layer include an aluminum foil. At least one of the adhesive layers 1, 2 and 3 is a cured coating film of the adhesive of the invention. Examples of the sealant film include the same as those in the configuration (1). As in the configuration (1), a print layer may be provided on either surface of the substrate 1.

Since the adhesive of the invention has excellent adhesiveness to a metal substrate or a vapor deposition layer of a metal, in a case where the laminate includes at least one of a metal vapor deposition film, a transparent vapor deposition film, or a metal layer, it is preferable that the adhesive layer in contact with the vapor deposition layer of the metal, the transparent vapor deposition layer, or the metal layer, particularly the adhesive in contact with these layers on the sealant film side is a cured coating film of the adhesive of the invention.

In addition, since the adhesive of the invention has excellent retort resistance, particularly excellent retort resistance even in a case where an acidic component is contained, it is also preferably used as the adhesive layer of, a laminate used for accommodating such a content, for example, the configuration examples (8) to (10).

The laminate of the invention may further include another film or substrate in addition to the above-mentioned configurations (1) to (10). As the other substrates, in addition to the stretched film, the unstretched film, and the transparent vapor deposition film mentioned above, a porous substrate such as paper, wood, or leather mentioned below can also be used. The adhesive used for bonding the other substrate may be the adhesive of the invention, or it is not necessary to be the adhesive of the invention.

The "other layer" may contain a known additive and stabilizer, for example, an antistatic agent, an easy adhesion coating agent, a plasticizer, a lubricant, an antioxidant. In addition, the "other layer" may be a layer obtained by subjecting the surface of the film to corona treatment, plasma treatment, ozone treatment, chemical treatment, solvent treatment, or the like as pre-treatment in order to improve adhesiveness in a case of being laminated with other materials.

The laminate of the invention can be suitably used for various applications, for example, a packaging material for food, pharmaceutical, and daily necessity, paper-made tableware such as a lid material, a paper straw, a paper napkin, a paper spoon, a paper plate, and a paper cup, an outdoor industrial application such as a barrier material, a roofing material, a solar cell panel material, a battery packaging material, a window material, an outdoor flooring material, a lighting protection material, an automobile member, a signboard and a sticker, a decorative sheet used in an injection molding simultaneous decoration method or the like, and a packaging material for a liquid detergent for laundry, a liquid detergent for kitchen, a liquid detergent for bathing, a liquid soap for bathing, a liquid shampoo, and a liquid conditioner.

<Packaging Material>

The laminate of the invention can be used as a multilayer packaging material for the purpose of protecting food, pharmaceutical, and the like. When it is used as a multilayer packaging material, the layer configuration can vary depending on the content, the use environment, and the form of use. In addition, the package of the invention may be appropriately provided with easy-opening treatment or a resealing means.

As an example of a specific embodiment of the packaging material of the invention, a packaging material obtained by forming a laminate having a sealant film, such as the above-mentioned configuration examples (1) and (4) to (10) of the laminate, into a bag is exemplified. The laminate is folded or overlapped so that the surfaces of the inner layers (the surface of the sealant film) face each other, and the peripheral edge parts are heat-sealed to form a bag. Examples of the bag forming method include a method of heat-sealing in the form of a side seal type, a two way seal type, a three way seal type, a four way seal type, an envelope bonding seal type, a butt-seam seal type, a shirred seal type, a flat bottom seal type, a square bottom seal type, a gusset type, and other heat seal types. The packaging material of the invention can take various forms depending on the content, use environment, and use form. A self-standing packaging material (standing pouch) or the like is also possible. Examples of the heat sealing method include a known method such as bar sealing, rotating roll sealing, belt sealing, impulse sealing, high-frequency sealing, and ultrasonic sealing.

A product using the packaging material of the invention is produced by filling the packaging material of the invention with a content through the opening part thereof and then heat-sealing the opening part. Examples of the content to be filled include, as food, confectionery such as rice confectionery, bean confectionery, nuts, a biscuit and a cookie, wafer confectionery, marshmallow, pie, semi-raw cake, candy, and snack confectionery, staple food such as bread, snack noodle, instant noodle, dried noodle, pasta, aseptically packaged boiled rice, soupy rice, rice porridge, packaged rice cake, and cereal food, an agricultural product such as pickles, boiled beans, fermented soybeans, miso, frozen tofu, tofu, enokidake mushroom, konjac, a processed product of wild plants, jam, peanut cream, salad, frozen vegetables, and a potato product, a livestock product such as ham, bacon, sausage, a processed chicken product, and corned beef, a seafood product such as fish ham and sausage, a seafood surimi product, boiled fish paste, seaweed, seafood cooked in soy sauce, bonito flakes, salted fish guts, smoked salmon, and spice cod roe, fruits such as a peach, an orange, a pineapple, an apple, a pear, and a cherry, vegetables such as corn, asparagus, a mushroom, an onion, a carrot, a radish, and a potato, cooked food such as frozen prepared food and chilled prepared food represented by a meat patty, a meat ball, fried seafood, a dumpling, and a croquette, a dairy product such as butter, margarine, cheeses, cream, instant creamy powder, and infant formula for infant, and food such as liquid seasoning, retort curry, and pet food.

In addition, as a non-food product, it can also be used as various packaging materials such as a cigarette, a disposable body warmer, a pharmaceutical product such as an infusion pack, a liquid detergent for laundry, a liquid detergent for kitchen, a liquid detergent for bathing, a liquid soap for bathing, a liquid shampoo, a liquid conditioner, cosmetics such as a skin lotion and a milky lotion, a vacuum insulation material, and a battery.

Examples

Hereinafter, the invention is described in more detail with reference to specific synthesis examples and examples, but the invention is not limited to these examples. Note that, in the following examples, "part(s)" and "%" represent "part(s) by mass" and "% by mass", respectively, unless otherwise specified.

<Preparation of Polyisocyanate Composition (X)>

(Polyisocyanate Composition (X-1))

Into a reaction container equipped with a stirrer, a thermometer, a nitrogen gas introduction tube, a rectification column, a water separator, and the like, 72 parts by mass of ethylene glycol, 158 parts by mass of diethylene glycol, 225 parts by mass of neopentyl glycol, 110 parts by mass of hexane glycol, 219 parts by mass of adipic acid, 46 parts by mass of sebacic acid, and 280 parts by mass of isophthalic acid were charged under nitrogen gas introduction. The temperature was raised to 250 °C while gradually raising the temperature in a nitrogen stream at normal pressure to perform a dehydration reaction, and the reaction was performed at 250 °C for 2 hours. When it was checked that the content was transparent and the column top temperature of the rectification column was 80 °C or lower, the temperature was reduced to 240 °C, the rectification column was switched to a condenser, a line was connected to a vacuum pump, and the reaction was continued under a reduced pressure of 30 to 60 Torr until a predetermined acid value and viscosity were reached, thereby obtaining a polyester polyol (PES-1). The reaction product (PES-1) had an acid value of 0.8 mg KOH/g and a hydroxyl value of 265.0 mg KOH/g.

Into a reaction container equipped with a stirrer, a thermometer, a nitrogen gas introduction tube, and a condenser, 550 parts of xylylene diisocyanate (XDI) and 42.8 parts by mass of 5-(2,5-dioxotetrahydro-3-furanyl)-3-methyl-3-cyclocarboxylic anhydride (EPICLON B-4500, manufactured by DIC Corporation) were charged and heated to 90 °C while stirring in a nitrogen gas stream, stirring was continued at 90 °C until the liquid became transparent, and when the liquid became transparent, the temperature was reduced to 60 °C. Thereafter, 450 parts by mass of polyester polyol (PES-1) were charged while paying attention to heat generation, followed by heating to 80 °C and reacting at 80 °C for 2 hours. Next, using a thin film distillation apparatus, purification was performed at a pressure of about 0.02 Torr and a temperature of 160 °C until the XDI in the urethane prepolymer, which was the reaction product of the XDI and the polyester polyol, became 0.05% by mass in the solid content, thereby obtaining a polyurethane polyisocyanate (A1-1). The NCO% of the polyurethane polyisocyanate (A1-1) was 7.6%.

Into a reaction container equipped with a stirrer, a thermometer, a nitrogen gas introduction tube, and a condenser, 1,000 parts of hexamethylene diisocyanate (HDI) were charged and were heated to 60 °C while stirring. To this, 0.5 parts of a quaternary ammonium salt was added dropwise, and when a predetermined refractive index was reached, a deactivator was appropriately added to complete the reaction. Next, using a thin film distillation apparatus, purification was performed at a pressure of about 0.02 Torr and a temperature of 160 °C until the HDI in the nurate body, which was a reaction product of HDI, became 0.05% by mass in the solid component, thereby obtaining an isocyanate derivative (A2-1). The NCO% of the isocyanate derivative (A2-1) was 21.8%.

Into a reaction container equipped with a stirrer, a thermometer, and a nitrogen gas introduction tube, 700 parts by mass of the polyurethane polyisocyanate (A1-1) and 300 parts by mass of the isocyanate derivative (A2-1) were charged and were heated to 60 °C in a nitrogen gas stream while stirring. Stirring was continued at 60 °C until the liquid became transparent, and when the liquid became transparent, the temperature was reduced to obtain a polyisocyanate composition (X-1). The NCO% of the polyisocyanate composition (X-1) was 12.3%, the residual XDI was 0.04%, and the residual HDI was 0.04% by mass. Further, the acid value (calculated value) when the acid anhydride group in the polyisocyanate composition (X-1) was ring-opened was 25.5 mg KOH/g.

(Polyisocyanate Composition (X-2))

Into a reaction container equipped with a stirrer, a thermometer, a nitrogen gas introduction tube, and a condenser, 785 parts of tolylene diisocyanate (TDI) and 30 parts of 5-(2,5-dioxotetrahydro-3-furanyl)-3-methyl-3-cyclocarboxylic anhydride (EPICLON B-4500, manufactured by DIC Corporation) were charged and were heated to 90 °C while stirring in a nitrogen gas stream, and stirring was continued at 90 °C until the liquid became transparent, and when the liquid became transparent, the temperature was reduced to 60 °C. Thereafter, 535 parts of a bifunctional polypropylene glycol (EXCENOL 420, manufactured by AGC Inc.) were charged while paying attention to heat generation, followed by heating to 80 °C and reacting at 80 °C for 2 hours. Next, using a thin film distillation apparatus, purification was performed at a pressure of about 0.02 Torr and a temperature of 160 °C until the TDI in the urethane prepolymer, which was a reaction product of TDI and polypropylene glycol, became 0.04% by mass in the solid content, thereby obtaining a polyisocyanate composition (X-2). The NCO% of the polyisocyanate composition (X-2) was 11.2%. Further, the acid value (calculated value) when the acid anhydride group in the polyisocyanate composition (X-1) was ring-opened was 25.5 mg KOH/g.

(Polyisocyanate Composition (X-3))

Into a reaction container equipped with a stirrer, a thermometer, a nitrogen gas introduction tube, and a condenser, 550 parts of xylylene diisocyanate (XDI) and 7.1 parts of 5-(2,5-dioxotetrahydro-3-furanyl)-3-methyl-3-cyclocarboxylic anhydride (EPICLON B-4500, manufactured by DIC Corporation) were charged and were heated to 90 °C while stirring in a nitrogen gas stream, and the stirring was continued at 90 °C until the liquid became transparent, and when the liquid became transparent, the temperature was reduced to 60 °C. Thereafter, 450 parts of polyester polyol (PES-1) were charged while paying attention to heat generation, followed by heating to 80 °C and reacting at 80 °C for 2 hours. Next, using a thin film distillation apparatus, purification was performed at a pressure of about 0.02 Torr and a temperature of 160 °C until the XDI in the urethane prepolymer, which was the reaction product of the XDI and the polyester polyol, became 0.05% by mass in the solid content, thereby obtaining a polyurethane polyisocyanate (A1-2). The NCO% of the polyurethane polyisocyanate (A1-2) was 7.6%.

Into a reaction container equipped with a stirrer, a thermometer, and a nitrogen gas introduction tube, 700 parts by mass of the polyurethane polyisocyanate (A1-2) and 300 parts by mass of the isocyanate derivative (A2-1) were charged and were heated to 60 °C in a nitrogen gas stream while stirring. Stirring was continued at 60 °C until the liquid became transparent, and when the liquid became transparent, the temperature was reduced to obtain a polyisocyanate composition (X-3). The NCO% of the polyisocyanate composition (X-3) was 12.3%, the residual XDI was 0.04% by mass, and the residual HDI was 0.04% by mass. Further, the acid value (calculated value) at the time of ring-opening of the acid anhydride group of the polyisocyanate composition (X-3) was 4.2 mg KOH/g.

(Polyisocyanate Composition (X-4))

Into a reaction container equipped with a stirrer, a thermometer, a nitrogen gas introduction tube, and a condenser, 785 parts of tolylene diisocyanate (TDI) and 5 parts by mass of pyromellitic anhydride were charged and were heated to 90 °C while stirring in a nitrogen gas stream, and the stirring was continued at 90 °C until the liquid became transparent, and when the liquid became transparent, the temperature was reduced to 60 °C. Thereafter, 535 parts by mass of a bifunctional polypropylene glycol (EXCENOL 420, manufactured by AGC Inc.) were charged while paying attention to heat generation, followed by heating to 80 °C and reacting at 80 °C for 2 hours. Next, using a thin film distillation apparatus, purification was performed at a pressure of about 0.02 Torr and a temperature of 160 °C until the TDI in the urethane prepolymer, which was the reaction product of TDI and polypropylene glycol, was 0.04% by mass in the solid content, thereby obtaining a polyurethane polyisocyanate (A1-3), which was used as a polyisocyanate composition (X-4). The NCO% of the polyisocyanate composition (X-4) was 11.2%. Further, the acid value (calculated value) when the acid anhydride group in the polyisocyanate composition (X-4) was ring-opened was 5.1 mg KOH/g.

(Polyisocyanate Composition (X-5))

Into a reaction container equipped with a stirrer, a thermometer, a nitrogen gas introduction tube, and a condenser, 550 parts of xylylene diisocyanate (XDI) and 30 parts by mass of 5-(2,5-dioxotetrahydro-3-furanyl)-3-methyl-3-cyclocarboxylic anhydride (EPICLON B-4500, manufactured by DIC Corporation) were charged and were heated to 90 °C while stirring in a nitrogen gas stream, stirring was continued at 90 °C until the liquid became transparent, and when the liquid became transparent, the temperature was reduced to 60 °C. Thereafter, 450 parts by mass of polyester polyol (PES-1) were charged while paying attention to heat generation, followed by heating to 80 °C and reacting at 80 °C for 2 hours. Next, using a thin film distillation apparatus, purification was performed at a pressure of about 0.02 Torr and a temperature of 160 °C until the XDI in the urethane prepolymer, which was the reaction product of the XDI and the polyester polyol, was 1.40% by mass in the solid content, thereby obtaining a polyurethane polyisocyanate (A1-4). The NCO% of the polyurethane polyisocyanate (A1-4) was 7.6%.

Into a reaction container equipped with a stirrer, a thermometer, and a nitrogen gas introduction tube, 700 parts by mass of the polyurethane polyisocyanate (A1-4) and 300 parts by mass of the isocyanate derivative (A2-1) were charged and were heated to 60 °C in a nitrogen gas stream while stirring. Stirring was continued at 60 °C until the liquid became transparent, and when the liquid became transparent, the temperature was reduced to obtain a polyisocyanate composition (X-5). The NCO% of the polyisocyanate composition (X-5) was 12.3%, the residual XDI was 1.00%, and the residual HDI was 0.04%. Further, the acid value (calculated value) at the time of ring-opening of the acid anhydride group in the polyisocyanate composition (X-5) was 25.5 mg KOH/g.

(Polyisocyanate Composition (X-6))

Into a reaction container equipped with a stirrer, a thermometer, and a nitrogen gas introduction tube, 800 parts by mass of the isocyanate derivative (A2-1) and 200 parts by mass of the nurate body of isophorone diisocyanate (VESTANAT T-1890/100 NCO% of 17.3, manufactured by EVONIK), and 30 parts by mass of 5-(2,5-dioxotetrahydro-3-furanyl)-3-methyl-3-cyclocarboxylic anhydride (EPICLON B-4500, manufactured by DIC Corporation) were charged and were heated to 130 °C while stirring in a nitrogen gas stream. Stirring was continued at 130 °C until the liquid became transparent, and when the liquid became transparent, the temperature was reduced to obtain a polyisocyanate composition (X-6). The NCO% of the polyisocyanate composition (X-6) was 20.9%, and the residual HDI was 0.04%. Further, the acid value (calculated value) at the time of ring-opening of the acid anhydride group in the polyisocyanate composition (X-6) was 25.5 mg KOH/g.

(Polyisocyanate Composition (X-7))

Into a reaction container equipped with a stirrer, a thermometer, a nitrogen gas introduction tube, and a condenser, 550 parts by mass of xylylene diisocyanate (XDI) were charged and were heated to 90 °C while stirring in a nitrogen gas stream, stirring was continued at 90 °C until the liquid became transparent, and when the liquid became transparent, the temperature was reduced to 60 °C. Thereafter, 450 parts by mass of polyester polyol (PES-1) were charged while paying attention to heat generation, followed by heating to 80 °C and reacting at 80 °C for 2 hours. Next, using a thin film distillation apparatus, purification was performed at a pressure of about 0.02 Torr and a temperature of 160 °C until the XDI in the urethane prepolymer, which was the reaction product of the XDI and the polyester polyol, was 0.05% by mass in the solid content, thereby obtaining a polyurethane polyisocyanate (A1-5). The NCO% of the polyurethane polyisocyanate (A1-5) was 7.6%.

Into a reaction container equipped with a stirrer, a thermometer, and a nitrogen gas introduction tube, 700 parts by mass of polyurethane polyisocyanate (A1-5) and 300 parts by mass of the isocyanate derivative (A2-1) were charged and were heated to 60 °C in a nitrogen gas stream while stirring. Stirring was continued at 60 °C until the liquid became transparent, and when the liquid became transparent, the temperature was reduced to obtain a polyisocyanate composition (X-7). The NCO% of the polyisocyanate composition (X-7) was 12.3%, the residual XDI was 0.04%, and the residual HDI was 0.04%.

(Polyisocyanate Composition (X-8))

Into a reaction container equipped with a stirrer, a thermometer, a nitrogen gas introduction tube, and a condenser, 785 parts of tolylene diisocyanate (TDI) were charged and were heated to 90 °C while stirring in a nitrogen gas stream, and stirring was continued at 90 °C until the liquid became transparent, and when the liquid became transparent, the temperature was reduced to 60 °C. Thereafter, 535 parts by mass of a bifunctional polypropylene glycol (EXCENOL 420, manufactured by AGC Inc.) were charged while paying attention to heat generation, followed by heating to 80 °C and reacting at 80 °C for 2 hours. Next, using a thin film distillation apparatus, purification was performed at a pressure of about 0.02 Torr and a temperature of 160 °C until the TDI in the urethane prepolymer, which was the reaction product of TDI and polypropylene glycol, was 0.04% by mass in the solid content, thereby obtaining a polyurethane polyisocyanate (A1-6), which was used as a polyisocyanate composition (X-8). The NCO% of the polyisocyanate composition (X-8) was 11.2%.

<Preparation of Polyol Composition (Y)>

(Polyol Composition (Y-1))

Into a reaction container equipped with a stirrer, a thermometer, a nitrogen gas introduction tube, a rectification column, a water separator and the like, 400 parts by mass of propylene glycol, 80 parts by mass of trimethylolpropane, 700 parts by mass of adipic acid and 0.1 parts by mass of titanium tetraisopropoxide were charged under nitrogen gas introduction, and the internal temperature was maintained at 250 °C by gradually heating so that the temperature of the upper part of the rectification column did not exceed 100 °C. When the acid value became 1 mg KOH/g or less, the esterification reaction was completed to obtain a polyol composition (Y-1). The polyol composition (Y-1) had a hydroxyl value of 152 mg KOH/g.

(Polyol Composition (Y-2))

Castor oil (manufactured by Itoh Oil Chemicals Co., Ltd.) was used as a polyol composition (Y-2).

(Polyol Composition (Y-3))

Into a reaction container equipped with a stirrer, a thermometer, a nitrogen gas introduction tube, a rectification column, a water separator, and the like, 540 parts of 3-methyl pentanediol, 460 parts of isophthalic acid, and 0.1 parts of titanium tetraisopropoxide were charged under nitrogen gas introduction, and the internal temperature was maintained at 250 °C by gradually heating so that the temperature of the upper part of the rectification column did not exceed 100 °C. When the acid value became 1 mg KOH/g or less, the esterification reaction was completed to obtain a polyester polyol (C1). The polyester polyol (C1) had a hydroxyl value of 224 mg KOH/g.

Into a reaction container equipped with a stirrer, 300 parts by mass of the polyester polyol (C1), 400 parts by mass of polypropylene glycol (EXCENOL 420, manufactured by AGC Inc.), 120 parts by mass of polypropylene polyol (EXCENOL 430, manufactured by AGC Inc.), and 0.5 parts by mass of dibutyltin dilaurate were charged and were heated to 60 °C while stirring. Stirring was continued at 60 °C until the liquid became transparent, and when the liquid became transparent, polyoxypropylene triamine (JEFFAMINE T-403, manufactured by Huntsman Corporation) was added, and stirring was continued at 60 °C until the liquid became transparent to obtain a polyol composition (Y-3). The polyol composition (Y-3) had a hydroxyl value of 227.2 mg KOH/g and an amine value of 60.7 mg KOH/g.

(Polyol Composition (Y-4))

Into a reaction container equipped with a stirrer, 950 parts by mass of the polyester polyol (C1) and 50 parts by mass of 5-(2,5-dioxotetrahydro-3-furanyl)-3-methyl-3-cyclocarboxylic anhydride (EPICLON B-4500, manufactured by DIC Corporation) were charged, followed by heating to 90 °C while stirring. Stirring was continued at 90 °C until the liquid became transparent, and when the liquid became transparent, the temperature was reduced to obtain a polyol composition (Y-4). The hydroxyl value of the polyol composition (Y-4) was 152 mg KOH/g, and the acid value at the time of ring-opening of the anhydride group was 42.5 mg KOH/g.

<Preparation of Evaluation Sample>

(Example 1)

An adhesive of Example 1 was prepared by stirring and mixing 1.4 parts of the polyisocyanate composition (X-1) and 0.6 parts of the polyol composition (Y-1). The adhesive of Example 1 was applied to a PET film (E5102, 12 $\mu$m, manufactured by Toyobo Co., Ltd.) so as to be 2.0 g/m$^2$, and it was pressure-bonded to an aluminum foil (9 $\mu$m) with a nip roll (50 °C). Subsequently, the adhesive of Example 1 was applied to an aluminum foil so as to be 2.0 g/m$^2$, and it was pressure-bonded to a CPP film (TORAYFAN ZK-207, 70 $\mu$m, manufactured by Toray Advanced Film Co., Ltd.) with a nip roll (50 °C). Aging was performed at 40 °C for 3 days to obtain a laminate 1 of PET/Al/CPP.

The laminate 1 was cut out at 100 mm × 200 mm, folded so that the CPP film was inside, and heat-sealed at 1 atm, 210 °C for 1 second to prepare a pouch. As a content, a 1/1/1 sauce (meat sauce: vegetable oil: vinegar = 1:1:1) was filled to prepare a test piece.

(Examples 2 to 4)

Evaluation samples of Examples 2 to 4 were obtained in the same manner as in Example 1 except that the adhesives shown in Table 1 were used.

(Example 5)

The polyisocyanate composition (X-1) was applied to a PET film, the polyol composition (Y-3) was applied to an aluminum foil, and the PET and the Al foil were pressure-bonded with a nip roll (50 °C). The application amounts of the polyisocyanate composition (X-1) and the polyol composition (Y-3) were 1.4 g/m$^2$ and 0.6 g/m$^2$, respectively. Subsequently, the polyisocyanate composition (X-1) was applied to the aluminum foil, and the polyol composition (Y-3) was applied to the CPP film, followed by aging at 40 °C for 3 days to obtain a laminate 1 of PET/Al/CPP. The application amounts of the polyisocyanate composition (X-1) and the polyol composition (Y-3) were 1.4 g/m$^2$ and 0.6 g/m$^2$, respectively.

A test piece filled with a content was prepared in the same manner as in Example 1 except that the laminate 1 prepared in Example 5 was used.

(Comparative Examples 1 to 4)

Evaluation samples of Comparative Examples 1 to 4 were obtained in the same manner as in Example 1 except that the adhesives shown in Table 2 were used.

(Comparative Examples 5 and 6)

Evaluation samples of Comparative Examples 5 and 6 were obtained in the same manner as in Example 5 except that the adhesives shown in Table 2 were used.

<Evaluation>

(Normal Adhesive Strength)

The adhesive strength (N/15 mm) between the aluminum foil and the CPP film of the laminate 1 was measured by a T-type peeling method using a tensile tester in an atmosphere of 25 °C with the peeling rate set to 300 mm/min. The results were evaluated according to the following five grades and summarized in Tables 1 and 2.

5: Adhesive strength of 4 N/15 mm or more
4: Adhesive strength of 3 N/15 mm or more and less than 4 N/15 mm or less
3: Adhesive strength of 2 N/15 mm or more and less than 3 N/15 mm or less
2: Adhesive strength of less than 2 N/15 mm
1: Peeled off before adhesive strength measurement

(Retort Resistance 1)

The test piece was subjected to retort treatment using a shower-type retort sterilizer (Flavor Ace, manufactured by Hisaka Works, Ltd.) under conditions of 121 °C and 30 minutes. The test piece after the retort treatment was opened, and the adhesion strength was measured in the same manner as in the normal adhesion strength. The results are summarized in Tables 1 and 2.

(Retort Resistance 2)

The test piece was subjected to retort treatment using a shower-type retort sterilizer (Flavor Ace, manufactured by Hisaka Works, Ltd.) under conditions of 121 °C and 30 minutes. The test piece after retort treatment was stored at 50 °C for 4 weeks and then opened, and the adhesive strength was measured in the same manner as in the normal adhesive strength. The results are summarized in Tables 1 and 2.

[Table 1]

|  | Example 1 | Example 2 | Example 3 | Example 4 | Example 5 |
|---|---|---|---|---|---|
| Polyisocyanate Composition (X-1) | 1.4 |  |  |  | 1.4 |
| Polyisocyanate Composition (X-2) |  | 1.4 |  |  |  |
| Polyisocyanate Composition (X-3) |  |  | 1.4 |  |  |
| Polyisocyanate Composition (X-4) |  |  |  | 1.4 |  |
| Polyol Composition (Y-1) | 0.6 |  | 0.6 |  |  |
| Polyol Composition (Y-2) |  | 0.6 |  | 0.6 |  |
| Polyol Composition (Y-3) |  |  |  |  | 0.6 |

(continued)

|  | Example 1 | Example 2 | Example 3 | Example 4 | Example 5 |
|---|---|---|---|---|---|
| Normal Adhesive Strength | 5 | 4 | 5 | 4 | 5 |
| Retort Resistance 1 | 5 | 4 | 4 | 3 | 5 |
| Retort Resistance 2 | 5 | 4 | 4 | 3 | 5 |

[Table 2]

|  | Comparative Example 1 | Comparative Example 2 | Comparative Example 3 | Comparative Example 4 | Comparative Example 5 | Comparative Example 6 |
|---|---|---|---|---|---|---|
| Polyisocyanate Composition (X-5) | 1.4 |  |  |  |  |  |
| Polyisocyanate Composition (X-6) |  |  |  |  |  | 1.4 |
| Polyisocyanate Composition (X-7) |  | 1.4 |  | 1.4 | 1.4 |  |
| Polyisocyanate Composition (X-8) |  |  | 1.4 |  |  |  |
| Polyol Composition (Y-1) | 0.6 | 0.6 |  |  |  |  |
| Polyol Composition (Y-2) |  |  | 0.6 |  |  |  |
| Polyol Composition (Y-3) |  |  |  |  | 0.6 | 0.6 |
| Polyol Composition (Y-4) |  |  |  | 0.6 |  |  |
| Normal Adhesive Strength | 5 | 5 | 4 | 5 | 5 | 3 |
| Retort Resistance 1 | 5 | 2 | 1 | 2 | 2 | 2 |
| Retort Resistance 2 | 2 | 1 | 1 | 1 | 1 | 2 |

**Claims**

1. A two-part curable solventless adhesive comprising: a polyisocyanate composition (X) and a polyol composition (Y),

   wherein the polyisocyanate composition (X) contains a polyurethane polyisocyanate (A1) which is a reaction product of a polyisocyanate (l) and a polyol (m), and an acid anhydride (B), an acid value derived from the acid anhydride (B) in the polyisocyanate composition (X) is 1 mg KOH/g or more and 100 mg KOH/g or less, a content of a diisocyanate monomer in the polyisocyanate composition (X) is 0.1% by mass or less, and the polyol composition (Y) contains a polyol (C).

2. The two-part curable solventless adhesive according to Claim 1, wherein the polyisocyanate (l) is at least one selected from an aromatic diisocyanate, an aromatic aliphatic diisocyanate, and an alicyclic diisocyanate.

3. The two-part curable solventless adhesive according to Claim 1, wherein the acid anhydride (B) is a non-aromatic carboxylic acid anhydride.

4. The two-part curable solventless adhesive according to Claim 1, wherein the polyol (C) include a polyester polyol (C1), and
the content of the polyester polyol (C1) in the polyol (C) is 20% by mass or more.

5. The two-part curable solventless adhesive according to Claim 4, wherein the polyester polyol (C1) is a reaction product of a polyhydric alcohol and a polycarboxylic acid and the polycarboxylic acid includes an aromatic polycarboxylic acid.

6. The two-part curable solventless adhesive according to Claim 4, wherein the polyester polyol (C1) has a hydroxyl value of 20 mg KOH/g or more and 400 mg KOH/g or less.

7. The two-part curable solventless adhesive according to Claim 1, wherein the polyol (C) include a polyether polyol (C2).

8. The two-part curable solventless adhesive according to Claim 7, wherein the polyether polyol (C2) has a hydroxyl value of 20 mg KOH/g or more and 400 mg KOH/g or less.

9. A polyisocyanate composition that does not contain a solvent comprising:

a polyurethane polyisocyanate (A1) which is a reaction product of a polyester polyol (l) and a polyisocyanate (m); and
an acid anhydride (B),
wherein an acid value derived from the acid anhydride (B) is 1 mg KOH/g or more and 100 mg KOH/g or less, and
a content of a diisocyanate monomer is 0.1% by mass or less

10. A laminate comprising a first substrate, a second substrate, and an adhesive layer for bonding the first substrate and the second substrate to each other, wherein the adhesive layer is a cured coating film of the two-part curable solventless adhesive according to any one of Claims 1 to 8.

11. The laminate according to Claim 10, wherein the first substrate is a metal foil.

12. The laminate according to Claim 10, wherein the first substrate has a deposition layer of a metal.

13. A packaging material comprising the laminate according to Claim 10.

# EP 4 703 448 A1

## INTERNATIONAL SEARCH REPORT

| | International application No. |
|---|---|
| | **PCT/JP2024/014631** |

**A. CLASSIFICATION OF SUBJECT MATTER**

*C09J 175/04*(2006.01)i; *B32B 15/095*(2006.01)i; *B32B 27/40*(2006.01)i; *B65D 65/40*(2006.01)i; *C08G 18/10*(2006.01)i; *C08G 18/66*(2006.01)i; *C09J 175/06*(2006.01)i

FI:   C09J175/04; B32B15/095; B32B27/40; B65D65/40 D; C08G18/10; C08G18/66 033; C09J175/06

According to International Patent Classification (IPC) or to both national classification and IPC

**B. FIELDS SEARCHED**

Minimum documentation searched (classification system followed by classification symbols)

C09J1/00-201/10; B32B1/00-43/00; B65D65/00-65/46; C08G18/00-18/87; C08G71/00-71/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2018-199251 A (DIC CORPORATION) 20 December 2018 (2018-12-20)<br>claims 1-2, 5-6, paragraphs [0012]-[0013], [0029]-[0040], [0049], [0077]-[0082], examples | 1-13 |
| Y | JP 2002-265552 A (ROHM & HAAS CO.) 18 September 2002 (2002-09-18)<br>claim 2, paragraphs [0001]-[0002] | 1-13 |
| Y | JP 2005-002286 A (SEKISUI CHEMICAL CO., LTD.) 06 January 2005 (2005-01-06)<br>claims 1-2, paragraphs [0001], [0005] | 1-13 |
| A | JP 2021-098825 A (TOYO INK SC HOLDINGS CO., LTD.) 01 July 2021 (2021-07-01)<br>entire text, all drawings | 1-13 |

☐ Further documents are listed in the continuation of Box C.        ☑ See patent family annex.

| | |
|---|---|
| *   Special categories of cited documents: | "T"  later document published after the international filing date or priority date and not in conflict with the application but cited to understand the principle or theory underlying the invention |
| "A"  document defining the general state of the art which is not considered to be of particular relevance | |
| "D"  document cited by the applicant in the international application | "X"  document of particular relevance; the claimed invention cannot be considered novel or cannot be considered to involve an inventive step when the document is taken alone |
| "E"  earlier application or patent but published on or after the international filing date | |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| **24 June 2024** | **02 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

### INTERNATIONAL SEARCH REPORT
**Information on patent family members**

International application No.

**PCT/JP2024/014631**

| Patent document cited in search report | | | Publication date (day/month/year) | Patent family member(s) | Publication date (day/month/year) |
|---|---|---|---|---|---|
| JP | 2018-199251 | A | 20 December 2018 | (Family: none) | |
| JP | 2002-265552 | A | 18 September 2002 | US 2003/0073800 A1 claim 2, paragraphs [0001]-[0002] EP 1241197 A1 CN 1375510 A | |
| JP | 2005-002286 | A | 06 January 2005 | (Family: none) | |
| JP | 2021-098825 | A | 01 July 2021 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014159548 A

- JP 2001172602 A

**Non-patent literature cited in the description**

- Handbook of Paint Raw Materials. 1970